# EUROPÄISCHE PATENTANMELDUNG

(11) **EP 3 090 904 A1**
(43) Veröffentlichungstag der Anmeldung: **09.11.2016**
(21) Anmeldenummer: 15166452.1
(22) Anmeldetag: 05.05.2015
(51) Int. Cl.: B60S 1/52, B05B 15/08, B05B 15/06

(54) **SCHEIBENWASCHDÜSE MIT VERBESSERTER EINSTELLMÖGLICHKEIT**

(71) Anmelder: Illinois Tool Works Inc., Glenview, IL 60025 (US)
(72) Erfinder: Düll, Florian, 97285 Röttingen (DE); Bräutigam, Martina, 97990 Weikersheim (DE); Limpert, Alexander, 97990 Weikersheim (DE)
(74) Vertreter: Liefhold, Christian

(57) **Zusammenfassung**

Scheibenwaschdüse (1) für eine Kraftfahrzeugscheibe (100), wobei die Scheibenwaschdüse (1) einen Düsenkörper (10), einen Düsenkörperhalter (20) und einen Träger (30), welcher dazu bestimmt ist, an einem Karosserieteil (110) des Kraftfahrzeugs befestigt zu werden, aufweist, wobei der Düsenkörperhalter (20) mit dem Düsenkörper (10) über ein erstes Gelenk (40) verbunden ist, wobei der Düsenkörperhalter (20) mit dem Träger (30) über ein zweites Gelenk (50) verbunden ist, wobei mindestens eines aus dem ersten Gelenk (40) und dem zweiten Gelenk (50) ein Kugelgelenk ist.

Verfahren zum Einstellen einer Sprührichtung einer Scheibenwaschdüse

## Beschreibung

Die Erfindung betrifft eine Scheibenwaschdüse zur Erzeugung eines bevorzugt oszillierenden Sprühstrahls für ein Kraftfahrzeug, insbesondere für die Front- oder Heckscheibe, wobei die Scheibenwaschdüse mindestens ein Kugelgelenk zur Einstellung der Strahlrichtung aufweist.

In der EP 1 629 896 B1 ist eine oszillierende Waschdüsenvorrichtung mit variabler Winkelanpassung gezeigt. Die Winkelanpassung erfolgt hier mittels eines Kugelgelenks.

Die Erfinder befanden den Stand der Technik insofern als nachteilig, als ein Kugelgelenk zwar eine flexible Einstellung erlaubt, dabei aber mit Nachteilen wie einer schwierig abzudichtenden Dichtfläche oder einer vergleichsweisen unpräzisen Verstellung einhergeht. Aufgabe der vorliegenden Erfindung ist es, die Nachteile des Stands der Technik zu verbessern.

Die Aufgabe wird durch die unabhängigen Ansprüche gelöst. Vorteilhafte Weiterbildungen sind in den Unteransprüchen definiert.

Insbesondere wird die Aufgabe gelöst durch eine Scheibenwaschdüse für eine Kraftfahrzeugscheibe, wobei die Scheibenwaschdüse einen Düsenkörper, einen Düsenkörperhalter und einen Träger, welcher dazu bestimmt ist, an einem Karosserieteil des Kraftfahrzeugs befestigt zu werden, aufweist, wobei der Düsenkörperhalter mit dem Düsenkörper über ein erstes Gelenk verbunden ist, wobei der Düsenkörperhalter mit dem Träger über ein zweites Gelenk verbunden ist und wobei mindestens eines aus dem ersten Gelenk und dem zweiten Gelenk ein Kugelgelenk ist.

Weiterhin wird die Aufgabe insbesondere gelöst durch ein Verfahren zum Einstellen einer Sprührichtung einer Scheibenwaschdüse, die einen Düsenkörper, einen Düsenkörperhalter und einen Träger, welcher dazu bestimmt ist, an einem Karosserieteil des Kraftfahrzeugs befestigt zu werden, aufweist, mit den folgenden Schritten:
- Einstellen der Sprührichtung relativ zum Träger und/oder relativ zum Düsenkörperhalter mittels eines ersten Gelenks zwischen dem Düsenkörper und dem Düsenkörperhalter;
- Einstellen der Sprührichtung relativ zum Träger mittels eines zweiten Gelenks zwischen dem Düsenkörperhalter und dem Träger;
wobei mindestens eines aus dem ersten Gelenk und dem zweiten Gelenk ein Kugelgelenk ist.

Hierdurch ist eine äußerst flexible (aufgrund des mindestens einen Kugelgelenks) und wenn notwendig auch sequenzielle (aufgrund der zwei verschiedenen Gelenke) Einstellung der Strahlrichtung der Scheibenwaschdüse möglich. Zum Beispiel kann das Kugelgelenk dafür verwendet werden, eine einzige konkrete Ausgestaltung/Dimensionierung der Scheibenwaschdüse für verschiedene Fahrzeugtypen oder Montagepositionen am Fahrzeug (z.B. Fahrerseite, Beifahrerseite) zu verwenden, indem insbesondere mittels des Kugelgelenks eine Anpassung an den jeweiligen Fahrzeugtyp oder die jeweilige Montageposition stattfindet, was z.B. direkt beim Scheibenwaschdüsenhersteller erfolgen kann. Hierdurch können Werkzeuge zur Produktion der Waschdüse effizienter verwendet werden und Modifikationen an der Düse sind wenn überhaupt erst bei extremen Änderungen der Anforderungen an die Sprühstrahlrichtung notwendig.

Zudem weist das Kugelgelenk zwar einen hohen Freiheitsgrad der Einstellung auf, es ist jedoch schwieriger, eine feine Einstellung zu finden. Die Erfindung ermöglicht es daher, einmal eine genaue Einstellung des Kugelgelenks durchzuführen, die beibehalten werden kann. Für spätere Anpassungen (z.B. die Höhe des Auftreffens auf der Windschutzscheibe) muss dann das Kugelgelenk nicht mehr verstellt werden, sondern diese Einstellung kann mittels des weiteren Gelenks durchgeführt werden. Bevorzugt ist hierfür das andere Gelenk ein andersartiges Gelenk, z.B. mit weniger Freiheitsgraden wie z.B. ein Axialgelenk.

Der Düsenkörper weist bevorzugt eine oder mehrere Fluidaustrittsöffnungen auf. Der Düsenkörper ist bezüglich zumindest eines Sprühstrahls bevorzugt das letzte Element bzw. die letzte Baugruppe in der kinematischen Kette zwischen Karosserie, Träger, Düsenkörperhalter und Düsenkörper, d.h., dass die Orientierung des Düsenkörpers die Strahlrichtung des einen Sprühstrahls vorgibt, indem die Fluidaustrittsöffnung des einen Sprühstrahls ortsfest bezüglich des Düsenkörpers angeordnet ist.

Bevorzugt weisen Träger, Düsenköperhalter und Düsenkörper einen oder mehrere Fluidkanäle zur Führung von Fluid zur der/den Fluidaustrittsöffnung/en auf. Besonders bevorzugt weist der Träger jedoch keinen Fluidkanal auf.

Das Karosserieteil des Kraftfahrzeugs ist z.B. ein Teil im Bereich des Übergangs von Motorhaube und Windschutzscheibe oder die Motorhaube selbst. Bevorzugt weist der Träger ein oder mehrere Befestigungsmittel (z.B. Befestigungsloch, Klammer oder Schnapphaken) auf, welche zur Anbindung des Trägers an das Karosserieteil des Kraftahrzeugs bestimmt sind.

Das Kugelgelenk weist bevorzugt einen Gelenkkopf mit einer zumindest bereichsweise kugelförmigen Außenkontur auf, welcher die eine Gelenkseite bildet, und eine Gelenkpfanne mit einer zumindest bereichsweisen kugelförmigen Innenkontur, welche die andere Gelenkseite bildet. Bevorzugt ist ein Fluidkanal zur Fluidaustrittsöffnung des Düsenkörpers vorhanden welcher eingerichtet ist, Waschflüssigkeit von der Kugelpfanne zu dem Kugelkopf oder umgekehrt zu führen. Das andere Gelenk ist bevorzugt ein Kugelgelenk, besonders bevorzugt jedoch ein Gelenk mit weniger Freiheitsgraden als das Kugelgelenk, wie z.B. ein Axialgelenk.

Der Düsenköperhalter ist bevorzugt als ein Verbindungselement zwischen Düsenkörper und Träger zu verstehen.

In einem weiteren erfindungsgemäßen Verfahren wird das Kugelgelenk nach dem Einstellen mittels eines zusätzlichen Fixiermittels oder mittels Materialverformung fixiert.

Hierdurch wird eine besondere Verstellsicherheit (d.h. Sicherheit gegen ungewolltes Verstellen) und je nach Fixiermittel oder Materialverformungsmethode zudem eine erhöhte Dichtigkeit (sofern Waschflüssigkeit von der Kugelpfanne in den Kugelkopf oder umgekehrt geführt wird) erreicht. Dieser Vorteil spielt synergetisch mit dem Vorhandensein eines weiteren Gelenks zusätzlich zu dem Kugelgelenk zusammen, denn trotz Fixierung des Kugelgelenks verbleibt eine Verstellmöglichkeit, so dass man es hinnehmen kann, dass das Kugelgelenk nicht mehr einfach oder überhaupt nicht mehr verstellt werden kann. Z.B. kann eine Anpassung der Scheibenwaschdüse an einen bestimmten Fahrzeugtyp mittels des Kugelgelenks bereits im Werk des Düsenherstellers vorgenommen werden, eine Feineinstellung, z.B. Höhenverstellung, wird dann mittels des noch vorhandenen weiteren Gelenks nach oder bei der Montage am Kraftfahrzeug vorgenommen. Auf diese Weise ist eine große Bandbreite verschiedener Einsatzmöglichkeiten mit nur einer Waschdüsenkonstruktion/-dimensionierung gegeben, wobei das Risiko eines zu einfachen (ungewollten) Verstellens oder eines undicht Werdens durch zu viele Gelenke vermindert wird.

Das Fixiermittel oder die Materialverformung sind bevorzugt reversibel. Z.B. ist das Fixiermittel eine Arretierschraube oder ein Arretierstift und die Materialverformung ist z.B. über eine Klemmschelle erreicht. Besonders bevorzugt ist das Fixiermittel oder die Materialverformung dauerhaft. Z.B. ist das Fixiermittel ein Klebstoff und die Materialverformung ein thermisches oder chemisches Schmelzen von Bereichen des Kugelgelenks, z.B. mittels Ultraschallschallschweißens.

Bevorzugt wird ein zusätzliches Dichtmittel vor oder nach dem Zusammenfügen des Kugelgelenks zwischen den Kugelkopf und die Kugelpfanne eingebracht, um eine vorteilhafte Abdichtung des Kugelgelenks zu erreichen. Das Dichtmittel ist z.B. ein bevorzugt elastischer Ring (Dichtungsring) oder eine Dichtungspaste. Z.B. wird ein Dichtungsring in den Boden der Kugelpfanne gelegt (z.B. in eine weiter unten genannte Dicht- oder Fixiermittelnut), dann wird das Kugelgelenk zusammengefügt, ausgerichtet und z.B. mittels Materialverformung fixiert. Besonders vorteilhaft ist dabei eine Variante, bei welcher mittels der Materialverformung die Kugelpfanne noch stärker gegen den Dichtungsring vorgespannt wird.

Besonders bevorzugt wird das Fixiermittel oder die Materialverformung gleichzeitig als Dichtmittel angewendet. Z.B. wird ein Ring aus Klebstoff in den Boden der Kugelpfanne eingebracht (z.B. in eine weiter unten genannte Dicht- oder Fixiermittelnut), dann wird das Kugelgelenk zusammengefügt, ausgerichtet und man lässt den Klebstoff dann aushärten. Alternativ oder zusätzlich wird eine umlaufende Schweißnaht zwischen Kugelpfanne und Kugelkopf erzeugt, welche gleichzeitig als Fixierung und Dichtung wirkt.

Was die Dichtungswirkung betrifft, so ist zu beachten, dass das Kugelelement in der Regel bereits eine Basisabdichtung gegen Auslaufen von Waschflüssigkeit aufweist-mit den eben beschriebenen Verfahren zur Erhöhung der Dichtigkeit wird diese jedoch noch weiter erhöht.

In einem weiteren Ausführungsbeispiel der vorliegenden Erfindung weist der Düsenkörper eine Struktur zur Erzeugung eines Fächerstrahls, insbesondere eines oszillierenden Sprühstrahls, auf.

Hierdurch wird ein großflächig wirkender Sprühstrahl erhalten. Durch die weiter bevorzugte Struktur zur Erzeugung eines oszillierenden Sprühstrahls wird zudem ein dennoch besonders kräftiger Sprühstrahl erhalten. Die Struktur ist z.B. eine so genannte Fluidic-Struktur. Die Struktur ist bevorzugt als separates Bauteil ausgeführt, z.B. als ein Chip oder Plättchen, welches in dem Düsenkörper gehalten, bevorzugt fixiert ist.

In einem weiteren Ausführungsbeispiel der erfindungsgemäßen Scheibenwaschdüse ist die Struktur zur Erzeugung eines Fächerstrahls zumindest teilweise als separates Bauteil ausgeführt und der Düsenkörper weist eine Ausnehmung mit einer Öffnung an der Seite des Düsenkörpers auf, an welcher Waschflüssigkeit aus dem Düsenkörper in Richtung der Kraftfahrzeugscheibe austreten wird oder austritt, wobei durch diese Öffnung hindurch die Struktur zur Erzeugung eines Fächerstrahls in die Ausnehmung einsetzbar oder eingesetzt ist.

Hierdurch kann die Struktur zu Wartungszwecken oder zum Austausch einfach herausgenommen werden, ohne dass der Düsenkörper von dem Düsenkörperhalter getrennt werden muss. Zudem wird die Montage vereinfacht, da die Montage der Struktur bezüglich des zeitlichen Ablaufs unabhängig von dem Zusammenbau des Düsenkörperhalters mit dem Düsenkörper ist.

In einem weiteren Ausführungsbeispiel der erfindungsgemäßen Scheibenwaschdüse ist die Ausnehmung in einem schnabelartigen Fortsatz des Düsenkörpers angeordnet.

Hierdurch wird mehr Raum für die Struktur zur Erzeugung des Fächerstrahls bereitgestellt, so dass der Gelenkbereich des Düsenkörpers in seinen Ausmaßen etwas kleiner gehalten werden kann. Zudem bietet der schnabelartige Fortsatz eine komfortable Angriffsfläche zum Einstellen der Strahlrichtung, so dass auf zusätzliche Werkzeugaufnahmeaussparungen verzichtet werden kann. Bevorzugt ist der schnabelartige Fortsatz an dem Kugelkopf des Kugelgelenks vorhanden.

In einem weiteren Ausführungsbeispiel der erfindungsgemäßen Scheibenwaschdüse ist an dem schnabelartigen Fortsatz ein Heizelement angeordnet.

Hierdurch kann ein Einfrieren verhindert oder eingefrorene Flüssigkeit aufgetaut werden. Besonders vorteilhaft spielt hier der schnabelartige Fortsatz mit dem Heizelement zusammen, insbesondere da der schnabelartige Fortsatz dem Heizelement sehr guten Halt verleiht. Das Heizelement ist z.B. eine Heizfolie oder ein Heizdraht. Bevorzugt umgibt das Heizelement den schnabelartigen Fortsatz um 360° (bezogen auf die Sprühstrahlachse), besonders bevorzugt ist das Heizelement um den schnabelartigen Fortsatz gewickelt. Besonders bevorzugt ist das erste Gelenk das Kugelgelenk und dann kann insbesondere eine hier beanspruchte Scheibenwaschdüse mit einem Heizelement an dem schnabelartigen Fortsatz an dem Kugelkopf des Kugelgelenks auch unabhängig von dem Vorhandensein oder Nichtvorhandensein eines zweiten Gelenks bereits als eine Erfindung gesehen werden, welche z.B. in einer separaten Patentanmeldung fokussiert werden kann.In einem weiteren Ausführungsbeispiel der erfindungsgemäßen Scheibenwaschdüse weist der Düsenkörper zusätzlich mindestens eine Struktur zur Erzeugung eines Punktstrahls auf.

Hierdurch können gezielt Bereiche der Scheibe mit zusätzlicher Flüssigkeit benetzt werden, welche eine besondere Reinigungswirkung erfordern - z.B. das direkte Sichtfeld des Fahrers. Da beide Strukturen an dem Düsenkörper angeordnet sind, kann mittels des ersten und des zweiten Gelenks eine gemeinsame Einstellung (ohne relative Verstellung) der beiden verschiedenen Strahlen erreicht werden. Bevorzugt weist der Düsenkörper zwei zusätzliche Strukturen zur Erzeugung eines Punktstrahls auf. Besonders bevorzugt ist das erste Gelenk das Kugelgelenk und dann kann insbesondere eine hier beanspruchte Scheibenwaschdüse mit einer Struktur zur Erzeugung eines Fächerstrahls und mit einer zusätzlichen Struktur zur Erzeugung eines Punkstrahls, jeweils an dem Düsenköper, auch unabhängig von dem Vorhandensein oder Nichtvorhandensein eines zweiten Gelenks bereits als eine Erfindung gesehen werden, welche z.B. in einer separaten Patentanmeldung fokussiert werden kann.

In einem weiteren Ausführungsbeispiel der erfindungsgemäßen Scheibenwaschdüse ist die Struktur zur Erzeugung eines Punktstrahls bevorzugt über ein weiteres Gelenk, bevorzugt Kugelgelenk an dem Düsenkörper gelagert.

Hierdurch ist wird eine noch höhere Flexibilität der Einstellung erreicht.

In einem weiteren Ausführungsbeispiel der erfindungsgemäßen Scheibenwaschdüse ist mindestens einem aus dem ersten Gelenk und dem zweiten Gelenk, bevorzugt dem zweiten Gelenk, ein Einstellgetriebe zugeordnet.

Hierdurch kann eine präzisere Einstellung erfolgen. Das Einstellgetriebe ist bevorzugt Bestandteil der Scheibenwaschdüse. Es weist bevorzugt mindestens zwei funktional zusammenwirkende Getriebeelemente auf. Es ist bevorzugt ein Schneckengetriebe mit einem Schneckenelement und einer Verzahnung, wodurch zusätzlich eine ungewollte Verstellung verhindert wird, da eine Verstellung nur durch Drehen des Schneckenelements zu erreichen ist. Das Einstellgetriebe weist bevorzugt einen Werkzeugaufnahmebereich (z.B. ein Torx, Innensechskant o.ä.) auf, damit es mittels eines Werkzeugs einstellbar ist. Hierdurch wird wiederum der besondere Vorteil der Kombination des Kugelgelenks mit dem anderen Gelenk deutlich. Denn während das Kugelgelenk eine hohe Flexibilität bzgl. des Einstellbereichs erlaubt, ist aufgrund des Einstellgetriebes die Einstellung des Gelenks mit Einstellgetriebe je nach Getriebeübersetzung begrenzter oder schwieriger, dafür jedoch (zumindest was eine manuelle Einstellung betrifft) präziser. Mit der Kombination verbindet man daher die Vorteile beider Verstellarten - insbesondere wenn man zudem das Kugelgelenk nach dessen Einstellung (die z.B. mittels eines Automaten sehr präzise erfolgen kann - manuell jedoch nicht sehr präzise ist) fixiert - und erhält somit eine besonders vielseitige Scheibenwaschdüse. Diese kann in einem großen Bereich (automatisch) voreingestellt und später weiterhin manuell und präzise nachgestellt werden.

In einem weiteren Ausführungsbeispiel der erfindungsgemäßen Scheibenwaschdüse ist mindestens einem aus dem ersten Gelenk und dem zweiten Gelenk, bevorzugt dem zweiten Gelenk, eine Einstellanzeigeeinrichtung zugeordnet.

Hierdurch ist eine reproduzierbare und überprüfbare Einstellung möglich. Die Einstellanzeigeeinrichtung weist bevorzugt ein Zeigerelement oder eine Zeigermarkierung auf und bevorzugt eine oder mehrere Skalenmarkierungen.

In einem weiteren Ausführungsbeispiel der erfindungsgemäßen Scheibenwaschdüse ist das erste Gelenk das Kugelgelenk.

Hierdurch ist eine vorteilhafte konstruktive Lösung gegeben.

In einem weiteren Ausführungsbeispiel der erfindungsgemäßen Scheibenwaschdüse ist das bezüglich des Kugelgelenks andere Gelenk aus dem ersten Gelenk und dem zweiten Gelenk, d.h. bevorzugt das zweite Gelenk, ein einachsiges Axialgelenk.

Hierdurch ist eine einfachere Nacheinstellung gegeben, da das Axialgelenk gegenüber dem Kugelgelenk weniger Freiheitsgrade aufweist. Ist einmal eine aufwendigere

Einstellung mittels des Kugelgelenks erreicht, kann später eine einfachere Nacheinstellung mittels des Axialgelenks erfolgen.

In einem weiteren Ausführungsbeispiel der erfindungsgemäßen Scheibenwaschdüse erlaubt das bezüglich des Kugelgelenks andere Gelenk aus dem ersten Gelenk und dem zweiten Gelenk, d.h. bevorzugt das zweite Gelenk, eine Verstellung um mindestens eine Achse, wobei diese Achse im in das Kraftfahrzeug eingebauten Zustand der Scheibenwaschdüse im Wesentlichen horizontal ausgerichtet ist.

Hierdurch wird mittels des anderen Gelenks eine einfache Höheneinstellung der Auftrefffläche des Sprühstrahls erreicht. Im Wesentlichen horizontal bedeutet bevorzugt, dass der kleinste gedachte Schnittwinkel der Achse mit der Fahrbahnebene kleiner als 45° bevorzugt kleiner als 20°, besonders bevorzugt kleiner als 10° ist oder die Achse schließlich parallel zur Fahrbahnebene ist. Bevorzugt ist diese Achse im in das Fahrzeug eingebauten Zustand im Wesentlichen senkrecht zur Fahrtrichtung, wodurch insbesondere bezüglich der ebenfalls im Wesentlichen senkrecht zur Fahrtrichtung ausgerichteten Front- und Heckscheibe des Fahrzeugs eine vorteilhafte Höhenverstellung der Auftrefffläche erreicht wird. Im Wesentlichen senkrecht bedeutet bevorzugt, dass der kleinste gedachte Schnittwinkel der Achse mit der Fahrtrichtung größer als 45° bevorzugt größer als 70°, besonders bevorzugt größer als 80° ist oder schließlich 90°, also senkrecht.

In einem weiteren Ausführungsbeispiel der erfindungsgemäßen Scheibenwaschdüse weist die Scheibenwaschdüse als Teil des Kugelgelenks eine Kugelpfanne auf, wobei die Kugelpfanne eine Verschweißfläche oder Klemmfläche aufweist, im Bereich welcher eine im Vergleich zur übrigen Materialdicke der Kugelpfanne reduzierte Materialdicke der Kugelpfanne vorliegt.

Hierdurch ist eine einfache Fixierung des Kugelgelenks mittels Verschweißens oder Verklemmens des Kugelgelenks im Bereich der Verschweißfläche bzw. Klemmfläche möglich.

In einem weiteren Ausführungsbeispiel der erfindungsgemäßen Scheibenwaschdüse weist das Kugelgelenk eine Dicht- oder Fixiermittelnut auf, bevorzugt als Teil der Kugelpfanne.

Hierdurch ist eine sehr vorteilhafte (insbesondere reproduzierbare) Positionierung des Fixier- und/oder Dichtmittels (wie oben beschrieben, z.B. Klebstoff, Dichtungsring, Dichtungspaste) gegeben. Bevorzugt umgibt die Nut eine Fluidaustrittsöffnung oder alle Fluidaustrittsöffnungen des Düsenkörperhalters und/oder eine Fluideintrittsöffnung oder alle Fluideintrittsöffnungen des Düsenkörpers, durch welche Waschmittelflüssigkeit von dem Düsenkörperhalter in den Düsenkörper geleitet wird.

In einem weiteren Ausführungsbeispiel der erfindungsgemäßen Scheibenwaschdüse weisen lediglich der Düsenkörper und der Düsenköperhalter oder lediglich der Düsenkörper einen oder mehrere Fluidkanäle auf.

Hierdurch verläuft kein Fluidkanal durch den Träger und bevorzugt auch nicht durch den Düsenkörperhalter. Das heißt, es muss auch kein Fluid durch oder über das zweite Gelenk und bevorzugt auch nicht durch das erste Gelenk geführt werden. Dies ist vorteilhaft, da ein Gelenk eine Dichtung erfordert und je weniger Dichtungen vorhanden sind, desto vorteilhafter ist dies.

Die Erfindung soll nun anhand von Zeichnungen beispielhaft weiter veranschaulicht werden. Hierbei zeigen:
Figur 1 eine Prinzipskizze einer erfindungsgemäßen Scheibenwaschdüse,
Figur 2a, 2b basierend auf Fig. 1 eine bevorzugte Ausführungsform,
Figur 3 basierend auf Fig. 1 und, zumindest was den Düsenkörperhalter und den Düsenkörper betrifft, basierend auf Fig. 3, eine bevorzugt Ausführungsform mit zusätzlichen Strukturen zur Erzeugung von Punkstrahlen,
Figur 4a, 4b eine Veranschaulichung der kleinsten Winkel zwischen Fahrbahnebene oder Fahrtrichtung und einer Gelenkachse, die zuvor in der Beschreibung Bezug erwähnt wurden.

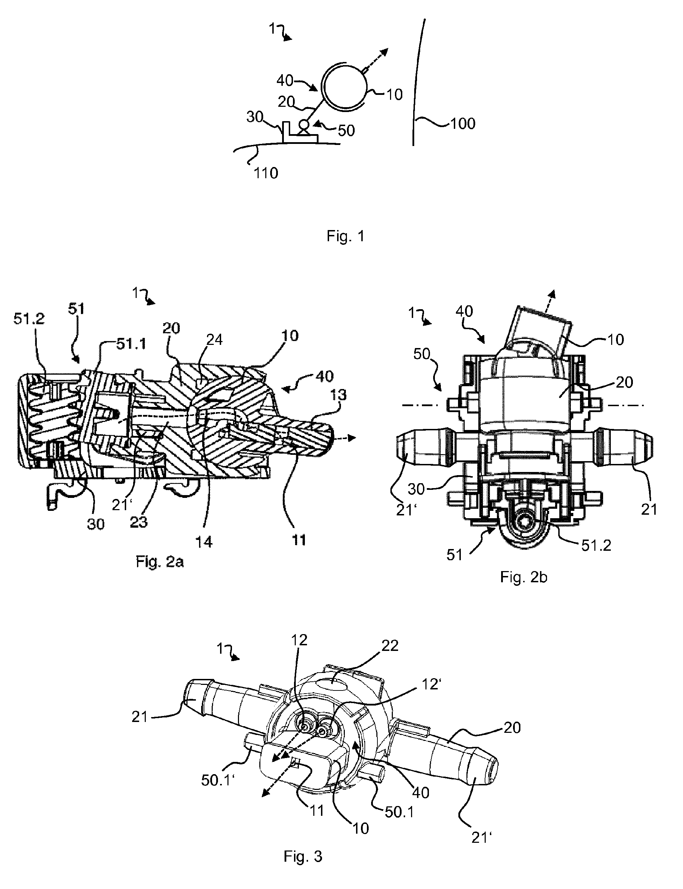

**Figur 1** zeigt eine Prinzipskizze einer erfindungsgemäßen Scheibenwaschdüse für eine Kraftfahrzeugscheibe 100. Die Scheibenwaschdüse 1 weist einen Düsenkörper 10, einen Düsenkörperhalter 20 und einen Träger 30 auf. Der Träger 30 ist dazu bestimmt, an einem Karosserieteil 110 des Kraftfahrzeugs befestigt zu werden. Der Düsenkörperhalter 20 ist mit dem Düsenkörper 10 über ein erstes Gelenk 40 verbunden. Der Düsenkörperhalter 20 ist mit dem Träger 30 über ein zweites Gelenk 50 verbunden. Mindestens eines aus dem ersten Gelenk 40 und dem zweiten Gelenk 50 ist ein Kugelgelenk. In dieser Darstellung wurde das erste Gelenk 40 als Kugelgelenk gezeichnet - es könnte jedoch stattdessen oder ebenso das zweite Gelenk 50 ein Kugelgelenk sein.

Das Einstellen der Sprührichtung Der Scheibenwaschdüse 1 weist die folgenden Schritte auf:
- Einstellen der Sprührichtung relativ zum Träger 30 und/oder relativ zum Düsenkörperhalter 20 mittels des ersten Gelenks 40 zwischen dem Düsenkörper 10 und dem Düsenkörperhalter 20;
- Einstellen der Sprührichtung relativ zum Träger 30 mittels des zweiten Gelenks 50 zwischen dem Düsenkörperhalter 20 und dem Träger 30;

Dabei wird folglich mindestens ein Kugelgelenk eingestellt.

Bevorzugt wird das Kugelgelenk nach dem Einstellen mittels eines zusätzlichen Fixiermittels oder mittels Materialverformung fixiert, was insbesondere bei der in Fig. 3 gezeigten Ausführungsform sehr vorteilhaft erfolgen kann.

Hierdurch ist eine sehr hohe Flexibilität der Einstellung gegeben, wobei das Vorhandensein einer zu dem Kugelgelenk zusätzlichen Einstellmöglichkeit weitere Vorteile im Montage-/Einstellablauf oder der Kompatibilität oder in Sachen Verstellsicherheit oder Dichtigkeit bietet. Der Waschflüssigkeit ist durch einen gestrichelten Pfeil angedeutet.

**Figur 2a, 2b** zeigen basierend auf Fig. 1 eine bevorzugte Ausführungsform. Fig. 2a zeigt eine seitliche Schnittansicht, analog zu Fig. 1, während Fig. 2b eine Aufsicht zeigt. Der Düsenkörper 10 weist eine Struktur 11 zur Erzeugung eines oszillierenden Sprühstrahls auf. Die Struktur 11 ist zumindest teilweise als separates Bauteil ausgeführt - nämlich als Chip bzw. Plättchen. Der Düsenkörper 10 weist eine Ausnehmung 13 mit einer Öffnung an der Seite des Düsenkörpers 10 auf, an welcher Waschflüssigkeit aus dem Düsenkörper 10 in Richtung der Kraftfahrzeugscheibe 100 austreten wird, wobei durch diese Öffnung hindurch die Struktur 11 zur Erzeugung eines Fächerstrahls in die Ausnehmung 13 eingesetzt ist. Die Ausnehmung 13 ist in einem schnabelartigen Fortsatz des Düsenkörpers 10 angeordnet. Dem zweiten Gelenk 50 ist ein Einstellgetriebe 51 zugeordnet. Es handelt sich hierbei um ein Schneckengetriebe, welches seitens des Düsenkörperhalters 20 eine Verzahnung 51.1 und seitens des Trägers 30 ein Schneckenelement 51.2 aufweist. Das Schneckenelement 51.2 weist einen Werkzeugaufnahmebereich (hier beispielhaft für Torx) auf. Das erste Gelenk 40 ist das Kugelgelenk. Die Scheibenwaschdüse 1 weist als Teil des Kugelgelenks eine Kugelpfanne auf, welche durch den Düsenkörperhalter 20 ausgebildet ist. Das Kugelgelenk weist eine Dicht- oder Fixiermittelnut 24 auf, die hier in dem Bodenbereich der Kugelpfanne angeordnet ist. Diese Nut 24 umgibt die Austrittsöffnung des Fluidkanals 23 des Düsenkörperhalters 20 sowie die Fluideintrittsöffnung des Fluidkanals 14 des Düsenkörpers 10. Das zweite Gelenk 50 ist ein einachsiges Axialgelenk, wobei koaxiale Zapfen 50.1, 50.1' (nur in Fig. 3 zu sehen) am Düsenkörperhalter 20 angeordnet sind, welche in entsprechenden Ausnehmungen am Träger 30 drehbar gelagert sind. Das zweite Gelenk 50 erlaubt eine Verstellung um mindestens eine Achse, wobei diese Achse im in das Kraftfahrzeug eingebauten Zustand der Scheibenwaschdüse 1 im Wesentlichen horizontal und im Wesentlichen quer bzw. senkrecht zur Fahrtrichtung ausgerichtet ist. Lediglich der Düsenkörper 10 und der Düsenköperhalter 20 weisen jeweils einen Fluidkanal 14, 23 auf. Der Träger 30 weist keinen Fluidkanal auf und es wird keine Waschflüssigkeit durch/über das zweite Gelenk 50 geleitet.

**Figur 3** zeigt basierend auf Fig. 1 und, zumindest was den Düsenkörperhalter und den Düsenkörper betrifft, basierend auf Fig. 3, eine bevorzugt Ausführungsform mit zusätzlichen Strukturen 12, 12' zur Erzeugung von Punkstrahlen, welche am Düsenkörper 10 angeordnet sind. Sie sind über je ein weiteres Gelenk, hier Kugelgelenk, an dem Düsenkörper 10 gelagert. Damit wird ein noch effektiveres und gleichzeitig einfach einzustellendes, da teilweise zusammen mit dem oszillierenden Sprühstahl einstellbares Sprühstrahlprofil erreicht. Die Kugelpfanne weist zudem eine Verschweißfläche 22 auf, im Bereich welcher eine im Vergleich zur übrigen Materialdicke der Kugelpfanne reduzierte Materialdicke der Kugelpfanne vorliegt, was für ein Verschweißen oder Verklemmen des Kugelgelenks sehr vorteilhaft ist.

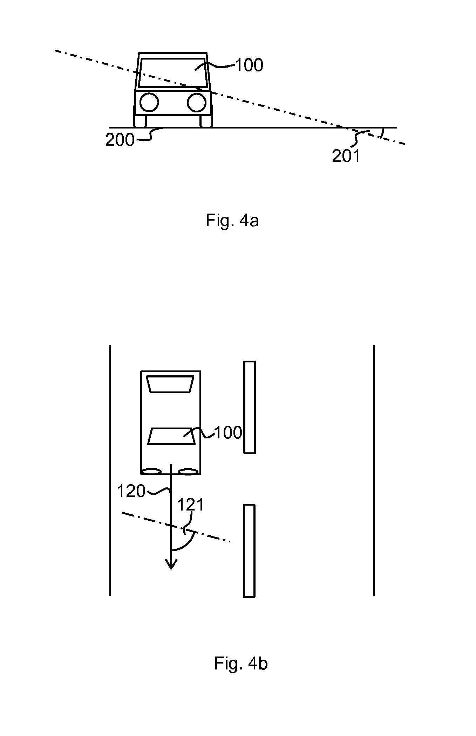

Figur 4a zeigt eine Veranschaulichung des kleinsten Winkels 201 zwischen Fahrbahnebene 200 und der Gelenkachse des anderen Gelenks aus Kugelgelenk und dem anderen Gelenk, Figur 4b zeigt eine Veranschaulichung des kleinsten Winkels 121 zwischen der Fahrtrichtung 120 und dieser Gelenkachse. Z.B. ist Winkel 201 annähernd 0° und Winkel 121 annähernd 90°.

Hiermit wurde eine besonders vorteilhafte Scheibenwaschdüse vorgestellt. Besonders erfinderisch ist die Erhöhung der Flexibilität und Einstellbarkeit durch eine Erhöhung der Genauigkeit und Reproduzierbarkeit, was auf die Kombination eines Kugelgelenks mit einem weiteren Verstellelement (das weitere Gelenk) zurückzuführen ist. Die erfindungsgemäße Waschdüse ist universell auch nach Änderungen in der Entwicklung und darüber hinaus einsetzbar. Eine optionale Skala, welche dem zusätzlichen Anpassungselement zugeordnet ist, wird bevorzugt verwendet, um z.B. auf Werkseinstellungen einfach zurücksetzen zu können. Eine optionale Fixierung mit zusätzlichen Materialien (z.B. Kleber) oder Wärmetransformationstechniken (z.B. Ultraschallschweißen), erhöhen z.B. die Dichtheit des Kugelgelenks. Durch Hinzufügen zusätzlicher Düsenöffnungen, die sich auch auf dem Düsenkörper, z.B. der Kugel des Kugelgelenks, befinden, ist das Sprühprofil weiter verbesserbar. Diese Öffnungen sind z.B. zusätzliche Kugeldüsen oder andere Strukturen. Eine unterschiedliche Anzahl von Öffnungen innerhalb einer Waschdüse kann zudem in Betracht gezogen werden und zudem die Auswahl, welcher dieser Öffnungen nach einem Feststellen des Kugelgelenks fest oder beweglich sind.

**Bezugszeichenliste**

| | | | |
|---|---|---|---|
| 1 | Scheibenwaschdüse | 51.1 | Verzahnung |
| 10 | Düsenkörper | 51.2 | Schneckenelement |
| 11 | Struktur zur Erzeugung eines Fächerstrahls | 100 | Kraftfahrzeugscheibe |
| | | 110 | Karosserieteil |
| 12 | Struktur zur Erzeugung eines Punktstrahls | 120 | Fahrtrichtung |
| | | 121 | kleinster Winkel zwischen Gelenkachse und Fahrtrichtung |
| 13 | Ausnehmung | | |
| 14 | Fluidkanal | 200 | Fahrbahnebene |
| 20 | Düsenkörperhalter | 201 | kleinster Winkel zwischen Gelenkachse und Fahrbahnebene |
| 21 | Fluidanschluss | | |
| 22 | Verschweißfläche | | |
| 23 | Fluidkanal | | |
| 24 | Dicht- oder Fixiermittelnut | | |
| 30 | Träger | | |
| 40 | erstes Gelenk | | |
| 50 | zweites Gelenk | | |
| 50.1 | Gelenkelement, hier Zapfen | | |
| 51 | Einstellgetriebe | | |

## Patentansprüche

1. Scheibenwaschdüse (1) für eine Kraftfahrzeugscheibe (100),
wobei die Scheibenwaschdüse (1) einen Düsenkörper (10), einen Düsenkörperhalter (20) und einen Träger (30), welcher dazu bestimmt ist, an einem Karosserieteil (110) des Kraftfahrzeugs befestigt zu werden, aufweist,
wobei der Düsenkörperhalter (20) mit dem Düsenkörper (10) über ein erstes Gelenk (40) verbunden ist,
wobei der Düsenkörperhalter (20) mit dem Träger (30) über ein zweites Gelenk (50) verbunden ist,
wobei mindestens eines aus dem ersten Gelenk (40) und dem zweiten Gelenk (50) ein Kugelgelenk ist.

2. Scheibenwaschdüse (1) nach Anspruch 1 wobei der Düsenkörper (10) eine Struktur (11) zur Erzeugung eines Fächerstrahls aufweist.

3. Scheibenwaschdüse (1) nach Anspruch 2, wobei die Struktur (11) zur Erzeugung eines Fächerstrahls zumindest teilweise als separates Bauteil ausgeführt ist und der Düsenkörper (10) eine Ausnehmung (13) mit einer Öffnung an der Seite des Düsenkörpers (10) aufweist, an welcher Waschflüssigkeit aus dem Düsenkörper (10) in Richtung der Kraftfahrzeugscheibe (100) austreten wird oder austritt, wobei durch diese Öffnung hindurch die Struktur (11) zur Erzeugung eines Fächerstrahls in die Ausnehmung (13) einsetzbar oder eingesetzt ist.

4. Scheibenwaschdüse (1) nach einem der vorhergehenden Ansprüche, wobei die Ausnehmung (13) in einem schnabelartigen Fortsatz des Düsenkörpers (10) angeordnet ist.

5. Scheibenwaschdüse (1) nach Anspruch 4, wobei an dem schnabelartigen Fortsatz ein Heizelement angeordnet ist.

6. Scheibenwaschdüse (1) nach einem der Ansprüche 2 bis 5, wobei der Düsenkörper (10) zusätzlich mindestens eine Struktur (12, 12') zur Erzeugung eines Punktstrahls aufweist.

7. Scheibenwaschdüse (1) nach Anspruch 6, wobei die Struktur (12, 12') zur Erzeugung eines Punktstrahls über ein weiteres Gelenk an dem Düsenkörper (10) gelagert ist.

8. Scheibenwaschdüse (1) nach einem der vorhergehenden Ansprüche, wobei mindestens einem aus dem ersten Gelenk (40) und dem zweiten Gelenk (50) ein Einstellgetriebe (51) zugeordnet ist.

9. Scheibenwaschdüse (1) nach einem der vorhergehenden Ansprüche, wobei mindestens einem aus dem ersten Gelenk (40) und dem zweiten Gelenk (50) eine Einstellanzeigeeinrichtung zugeordnet ist.

10. Scheibenwaschdüse (1) nach einem der vorhergehenden Ansprüche, wobei das erste Gelenk (40) das Kugelgelenk ist.

11. Scheibenwaschdüse (1) nach einem der vorhergehenden Ansprüche, wobei das bezüglich des Kugelgelenks andere Gelenk aus dem ersten Gelenk (40) und dem zweiten Gelenk (50) ein einachsiges Axialgelenk ist.

12. Scheibenwaschdüse (1) nach einem der vorhergehenden Ansprüche, wobei das bezüglich des Kugelgelenks andere Gelenk aus dem ersten Gelenk (40) und dem zweiten Gelenk (50) eine Verstellung um mindestens eine Achse erlaubt, wobei diese Achse im in das Kraftfahrzeug eingebauten Zustand der Scheibenwaschdüse (1) im Wesentlichen horizontal ausgerichtet ist.

13. Scheibenwaschdüse (1) nach einem der vorhergehenden Ansprüche, wobei die Scheibenwaschdüse (1) als Teil des Kugelgelenks eine Kugelpfanne aufweist und wobei die Kugelpfanne eine Verschweißfläche (22) aufweist, im Bereich welcher eine im Vergleich zur übrigen Materialdicke der Kugelpfanne reduzierte Materialdicke der Kugelpfanne vorliegt.

14. Scheibenwaschdüse (1) nach einem der vorhergehenden Ansprüche, wobei das Kugelgelenk eine Dicht- oder Fixiermittelnut (24) aufweist.

15. Scheibenwaschdüse (1) nach einem der vorhergehenden Ansprüche, wobei lediglich der Düsenkörper (10) und der Düsenköperhalter (20) oder lediglich der Düsenkörper (10) einen oder mehrere Fluidkanäle (14, 23) aufweist.

16. Verfahren zum Einstellen einer Sprührichtung einer Scheibenwaschdüse (1), die einen Düsenkörper (10), einen Düsenkörperhalter (20) und einen Träger (30), welcher dazu bestimmt ist, an einem Karosserieteil (110) des Kraftfahrzeugs befestigt zu werden, aufweist, mit den folgenden Schritten:
- Einstellen der Sprührichtung relativ zum Träger (30) und/oder relativ zum Düsenkörperhalter (20) mittels eines ersten Gelenks (40) zwischen dem Düsenkörper (10) und dem Düsenkörperhalter (20);
- Einstellen der Sprührichtung relativ zum Träger (30) mittels eines zweiten Gelenks (50) zwischen dem Düsenkörperhalter (20) und dem Träger (30);
wobei mindestens eines aus dem ersten Gelenk (40) und dem zweiten Gelenk (50) ein Kugelgelenk ist.

17. Verfahren gemäß Anspruch 16, wobei das Kugelgelenk nach dem Einstellen mittels eines zusätzlichen Fixiermittels oder mittels Materialverformung fixiert wird.
